# EUROPEAN PATENT APPLICATION

(11) **EP 4 593 438 A1**
(43) Date of publication of application: **30.07.2025**
(21) Application number: 22959546.7
(22) Date of filing: 21.09.2022
(51) Int. Cl.: H04W 12/04, H04W 12/10

(54) **NETWORK NODE, COMMUNICATION SYSTEM AND COMMUNICATION METHOD**

(71) Applicant: NTT DOCOMO, INC., Tokyo 100-6150 (JP)
(72) Inventor: MINOKUCHI, Atsushi, Tokyo 100-6150 (JP); SAMA, Malla Reddy, 80687 Munich (DE)
(74) Representative: Hoffmann Eitle
(86) International application number: PCT/JP2022/035281
(87) International publication number: WO 2024/062582

(57) **Abstract**

A network node includes: a control unit configured to, in order to establish a safe communication path between another network node and a terminal, based on a type of the another network node or on information indicating a network slice to which the another network node belongs, generate a key, used by the another network node, in a manner in which a value of the key is different for each type or for each network slice; and a transmission unit configured to transmit a message including the key to the another network node.

## Description

### FIELD OF THE INVENTION

The present invention relates to a network node, a communication system, and a communication method in a wireless communication system.

### BACKGROUND OF THE INVENTION

In NR (New Radio) (also referred to as "5G") that is a successor system of LTE (Long Term Evolution), a network architecture has been discussed which includes: 5GC (5G Core Network) corresponding to EPC (Evolved Packet Core) that is a core network in an LTE (Long Term Evolution) network architecture; and NG-RAN (Next Generation - Radio Access Network) corresponding to E-UTRAN (Evolved Universal Terrestrial Radio Access Network) that is a RAN (Radio Access Network) in the LTE network architecture (for example, Non-Patent Document 1 and Non-Patent Document 2).

In addition, technical specifications of 6G that is a successor system of NR are being discussed. For example, in 6G, a configuration for achieving the localization or shortening of the NAS (Non-Access Stratum) signal transmission path is being discussed (for example, Non-Patent Document 3).

### CITATION LIST

### Non-Patent Document

Non-Patent Document 1: 3GPP TS 23.501 V17.5.0 (2022-06)
Non-Patent Document 2: 3GPP TS 23.502 V17.5.0 (2022-06)
Non-Patent Document 3: Next G Alliance Report: 6G Technologies, June 2022, Internet<URL: https://www.nextgalliance.org/wp-content/uploads/dlm_uploads/2022/07/TWG-report-6G-technologies.pdf>

### SUMMARY OF THE INVENTION

### TECHNICAL PROBLEM

In order to achieve localization or shortening of the NAS signal transmission path, for example, a configuration can be considered in which the RAN terminates NAS signals carrying a transport function, and, at the same time, the RAN functions as a termination point of communications in which confidentiality and the integrity protection of all of the NAS signals are guaranteed. However, in this case, there is a problem that the security in the communication between the RAN and the core network is not sufficiently guaranteed with respect to the NAS signals other than the NAS signals carrying a transport function. As described above, in the conventional technique, there is a problem that localization and shortening of the NAS signal transmission path together with the guaranteed security cannot be achieved.

The present invention has been made in view of the above-described points and is intended to achieve localization and shortening of the NAS signal transmission path together with the guaranteed security.

### SOLUTION TO PROBLEM

According to the disclosed technique, a network node is provided. The network node includes: a control unit configured to, in order to establish a safe communication path between another network node and a terminal, based on a type of the another network node or on information indicating a network slice to which the another network node belongs, generate a key, used by the another network node, in a manner in which a value of the key is different for each type or for each network slice; and a transmission unit configured to transmit a message including the key to the another network node.

### ADVANTAGEOUS EFFECTS OF INVENTION

According to the disclosed technique, a technique is provided that enables implementation of localization and shortening of the NAS signal transmission path together with the guaranteed security.

### BRIEF DESCRIPTION OF THE DRAWINGS

[Fig. 1] is a drawing for describing a wireless communication system related to an embodiment of the present invention.
[Fig. 2] is a drawing illustrating a configuration example of a wireless communication system related to an embodiment of the present invention.
[Fig. 3] is a drawing for describing the conventional NAS signal transmission path.
[Fig. 4] is a drawing for describing a mechanism of distributed NAS signal termination.
[Fig. 5] is a sequence diagram illustrating an example of a flow of a PDU session establishment procedure related to Embodiment 1 of the present invention.
[Fig. 6] is a sequence diagram illustrating an example of a flow of a position information acquisition procedure related to Embodiment 2 of the present invention.
[Fig. 7] is a sequence diagram illustrating an example of a flow of a terminal policy configuration procedure related to Embodiment 3 of the present invention.
[Fig. 8] is a drawing illustrating an example of a functional structure of a base station related to an embodiment of the present invention.
[Fig. 9] is a drawing illustrating an example of a functional structure of a terminal related to an embodiment of the present invention.
[Fig. 10] is a drawing illustrating an example of a hardware structure of the base station or the terminal related to an embodiment of the present invention.
[Fig. 11] is a drawing illustrating an example of a structure of a vehicle related to an embodiment of the present invention.

### DETAILED DESCRIPTION OF THE PREFERRED EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used accordingly. The conventional techniques include, but are not limited to, conventional NR or LTE, for example. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression of a radio parameter being "configured" may mean that a predetermined value is pre-configured, or may mean that a radio parameter indicated by the base station or the terminal is configured.

### (System configuration)

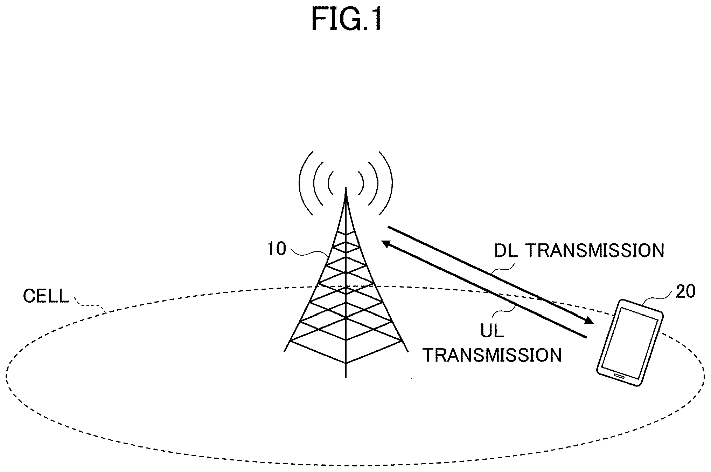

Fig. 1 is a drawing illustrating a wireless communication system related to an embodiment of the present invention.
As illustrated in Fig. 1, the wireless communication system according to an embodiment of the present invention includes a base station 10 and a terminal 20. In Fig. 1, a single base station 10 and a single terminal 20 are illustrated as an example, but there may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. Further, a TTI (Transmission Time Interval) in the time domain may be a slot, or the TTI may be a subframe.

The base station 10 transmits a synchronization signal and system information to the terminal 20. The synchronization signal is, for example, an NR-PSS and an NR-SSS. The system information is transmitted via, for example, an NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals. Note that the terminal 20 may be referred to as a UE, and the base station 10 may be referred to as a gNB.

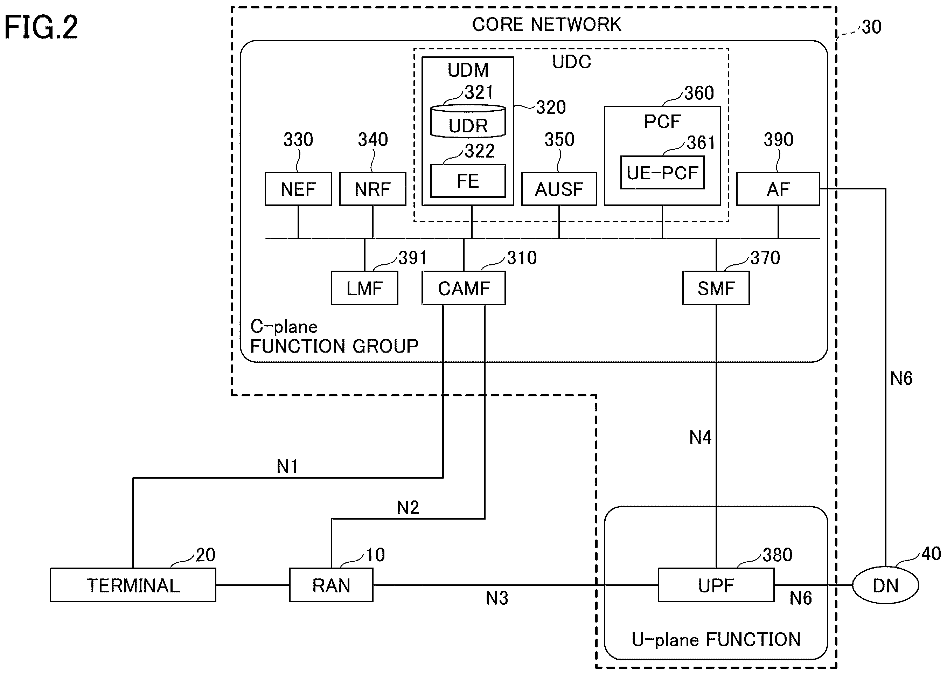

Fig. 2 is a drawing illustrating a configuration example of a wireless communication system related to an embodiment of the present invention. The wireless communication system includes a RAN 10, a terminal 20, a core network 30, and a DN (Data Network) 40.

The core network 30 is a network including switches, a subscriber information management device, and the like. The core network 30 includes a network node that provides a U-Plane function, and a network node group that provides a C-Plane function group.

The U-Plane function is a function of performing processing of transmission and reception of user data. The network node that provides the U-Plane function is a UPF (User plane function) 380, for example. The UPF 380 is a network node that has functions of: an external PDU (Protocol Data Unit) session point for interconnection with the DN 40; packet routing and forwarding; user plane QoS (Quality of Service) handling; and the like. The UPF 380 controls transmission and reception of data between the DN 40 and the terminal 20. The UPF 380 and the DN 40 may include one or more network slices.

The C-Plane function group is a function group that performs a series of control processes for communication establishment and the like. The network node group that provides the C-Plane function group includes, for example, a CAMF (Compact Access and Mobility Management Function) 310, a UDM (Unified Data Management) 320, an NEF (Network Exposure Function) 330, an NRF (Network Repository Function) 340, an AUSF (Authentication Server Function) 350, a PCF (Policy Control Function) 360, an SMF (Session Management Function) 370, an AF (Application Function) 390, and an LMF (Location Management Function) 391.

The CAMF 310 is an AF in which the conventional AMF (Access and Mobility Management Function) functions are partially omitted. The conventional AMF is a network node having functions of terminating the RAN interface, terminating the NAS (Non-Access Stratum) carrying the transport function, managing registrations, managing connections, managing reachability, managing mobility, and the like. On the other hand, the CAMF 310 is a network node in which functions of, for example, terminating the RAN interface and terminating the NAS carrying the transport function are omitted, and is a network node having functions of, for example, managing registrations, managing connections, managing reachability, managing mobility, and the like.

The NRF 340 is a network node having a function of discovering NF (Network Function) instances that provide services. The UDM 320 is a network node that manages subscriber data and authentication data. The UDM 320 includes a UDR (User Data Repository) 321 that stores the above-described data and an FE (Front End) 322. The FE 322 processes subscriber information.

The SMF 370 is a network node having functions such as session management, IP (Internet Protocol) address assignment and management for terminals 20, a DHCP (Dynamic Host Configuration Protocol) function, an ARP (Address Resolution Protocol) proxy, a roaming function, and the like. The NEF 330 is a network node having a function of indicating capabilities and events to other NFs (Network Functions).

The PCF 360 is a network node having a function of performing policy control of the network. The PCF 360 may include the UE-PCF 361. The UE-PCF 361 is a network node having a function of performing policy control of the terminal 20.

The AF (Application Function) 390 is a network node having a function of controlling the application server.

The LMF 391 is a network node having functions of managing adjustment, scheduling, and the like of resources necessary for measurement of the positions of the terminals 20 registered in or accessing the core network 30.

The AMF 310 is connected to, and capable of communicating with, the RAN 10 via the N2 link. The UPF 380 is connected to, and capable of communicating with, the RAN 10 via the N3 link. The UPF 380 is connected to, and capable of communicating with, the SMF 370 via the N4 link. The UPF 380 is connected to, and capable of communicating with, the DN 40 via the N6 link.

### (Problem of conventional technique)

Next, the problem of the conventional technique will be described. Conventionally, the AMF has a function of terminating the NAS signals whose confidentiality and integrity protection are guaranteed.

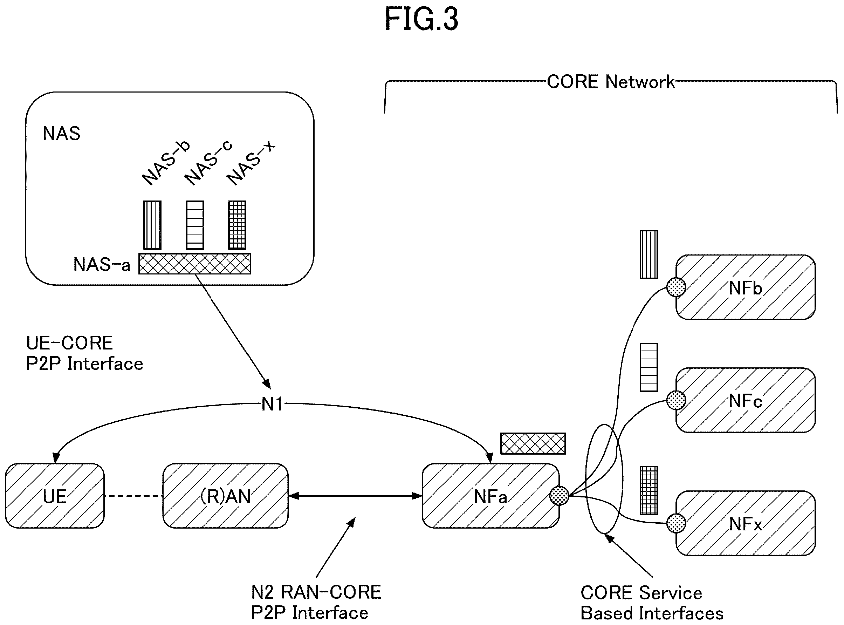

Fig. 3 is a drawing for describing the conventional NAS signal transmission path. The NFa illustrated in Fig. 3 corresponds to the AMF. The NFa has a function of terminating the NAS-a signal in the communications with a terminal. Each of the network nodes other than the NFa (NFb, NFc, or NFx) performs communications of NAS-b signals, NAS-c signals, or NAS-x signals transmitted to or from the terminal by using a layer that is established by the NAS-a signals.

In order to achieve localization or shortening of the NAS signal transmission path, for example, a configuration can be considered in which the RAN terminates NAS signals carrying a transport function, and, at the same time, the RAN functions as a termination point of communications in which confidentiality and the integrity protection of all of the NAS signals are guaranteed. However, in this case, there is a problem that the security in the communication between the RAN and the core network is not sufficiently guaranteed with respect to the NAS signals other than the NAS signals carrying a transport function.

Accordingly, a configuration in which each NF that terminates various NAS signals from terminals functions as a termination point of communications in which confidentiality and the integrity protection of the NAS signals are guaranteed is disclosed in Non-Patent Document 3.

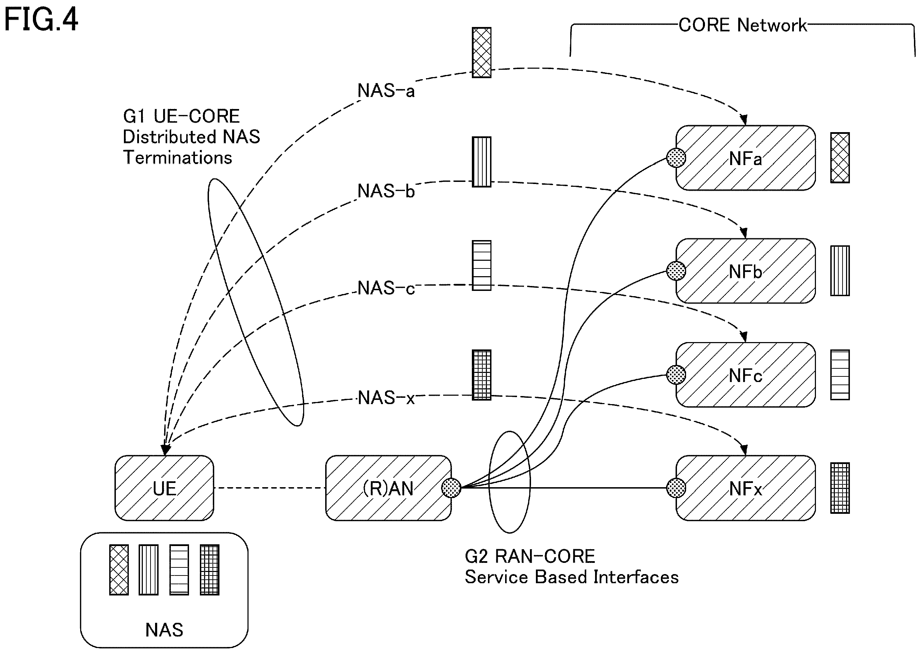

Fig. 4 is a drawing for describing a mechanism of distributed NAS signal termination. Each network node (NFa, NFb, Nfc, or NFx) functions as a termination point of communications in which confidentiality and the integrity protection of the corresponding NAS-a signal, NAS-b signal, NAS-c signal, or NAS-x signal are guaranteed. Here, the confidentiality and the integrity protection of the NAS-a signal, NAS-b signal, NAS-c signal, or NAS-x signal are respectively implemented between a terminal and an NFa, between a terminal and an NFb, between a terminal and an NFc, or a terminal and an NFx.

However, conventionally, a specific method for implementing the configuration illustrated in Fig. 4 has not been discussed.

### (Overview of embodiment)

In order to solve the conventional problem described above, in an embodiment of the present invention, an example will be described in which each network node functions as a termination point of an individual NAS signal.

For example, the CAMF 310 (first network node) that manages Kamf derives, from Kamf by using the calculation algorithm that is shared with the terminal 20 in advance, a key (Knfy_a) that is used by the NF-Y (second network node) of the network slice A. The calculation algorithm may include, in input parameters, the network slice name (for example, network slice A or network slice B), the NF type name (for example, NF-Y or NF-Z), or the like, in order to cause the value of the key to be different for the sake of minimizing the damage in a case where the key leaks. In other words, the CAMF 310 generates the key (Knfy_a) in a manner in which the value is different on a network slice name basis or on a NF type name basis.

It is to be noted that information that specifies the DN 40 (for example, DNN (Data Network Name)) may be used as an input parameter instead of the network slice or in addition to the network slice.

The CAMF 310 distributes each key and the information indicating the terminal security capability that has been acquired from the terminal 20 in advance to the corresponding NF-Y. The CAMF 310 may distribute the information indicating the terminal security capability based on the request from an NF-Y (that is, security information acquisition request).

Each NF-Y causes the terminal 20 to start the security mode indication procedure and establishes the communication path, in which the confidentiality and the integrity protection are guaranteed, between the NF-Y and the terminal 20. Here, each NF-Y uses the communication path between the terminal 20 and the CAMF 310, in which the confidentiality and the integrity protection are guaranteed, before the communication path in which confidentiality and the integrity protection are guaranteed is not established between the terminal 20 and the NF-Y or during the time of the security mode indication procedure, for example.

Next, an operation of a communication system related to an embodiment of the present invention will be described. Hereinafter, Embodiment 1 to Embodiment 3 will be described as specific embodiments of the present invention.

### (Embodiment 1)

In this embodiment, an example will be described in which the SMF 370 establishes a PDU session between the SMF 370 and the terminal 20.

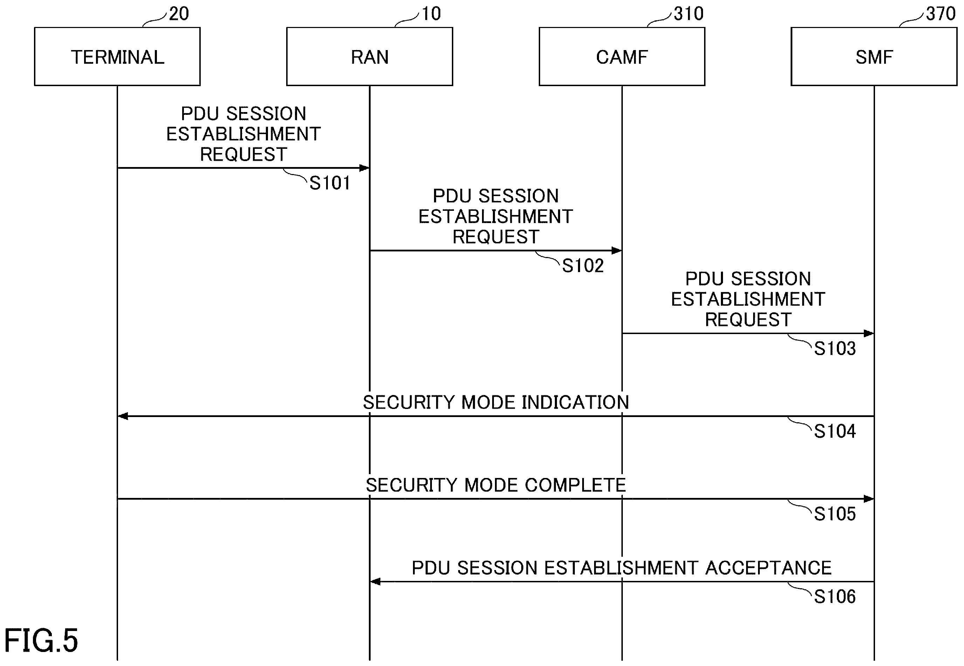

Fig. 5 is a sequence diagram illustrating an example of a flow of a PDU session establishment procedure related to Embodiment 1 of the present invention. It is assumed that the initial registration procedure of the terminal 20 is completed.

The CAMF 310 has stored information indicating the security capability of the terminal 20 and a key Kamf. In addition, confidentiality and the integrity protection are guaranteed in the communication between the terminal 20 and the CAMF 310.

In order to establish a PDU session in a network slice of S-NSSAI=A, the terminal 20 transmits, to the RAN 10, a message indicating the PDU session establishment request (step S101). Here, the messages including the PDU session establishment request terminated by the RAN 10 includes information indicating presence or absence of the security establishment request (for example, "the security establishment request is present") and information specifying the network slice name (for example, "S-NSSAI=A").

The RAN 10 forwards the message indicating the PDU session establishment request to the CAMF 310 by referring to the message indicating presence or absence of the security establishment request (for example, "the security establishment request is present") (step S102). The messages including the PDU session establishment request terminated by the CAMF 310 includes information indicating presence or absence of the security establishment request (for example, "the security establishment request is present") and information specifying the network slice name (for example, "S-NSSAI=A").

The CAMF 310 generates a key Ksmf_a from the key Kamf for the SMF 370 that accommodates the network slice specified by the information specifying the network slice name (for example, "S-NSSAI=A"). Here, information indicating the network node type (for example, "NF type=SMF") and information specifying the network slice (for example, "S-NSSAI=A") are included as inputs to the key-deriving function.

The CAMF 310 forwards the message indicating the PDU session establishment request to the SMF 370 (step S103). Here, the messages including the PDU session establishment request terminated by the SMF 370 includes information indicating the security capability of the terminal 20, the key Ksmf_a, information indicating presence or absence of the security establishment request (for example, "the security establishment request is present"), and information specifying the network slice name (for example, "S-NSSAI=A").

The SMF 370 generates a key for confidentiality Ksmf_a_nas_enc and a key for the integrity protection Ksmf_a_nas_int from the key Ksmf_a. Subsequently, the SMF 370 transmits a message indicating the security mode indication to the terminal 20 via the CAMF 310 (step S104).

The terminal 20 generates the key for confidentiality Ksmf_a_nas_enc and the key for the integrity protection Ksmf_a_nas_int by using the calculation algorithm that is shared in advance.

Subsequently, the terminal 20 transmits a message indicating the security mode completion to the SMF 370 via the CAMF 310 (step S105). Here, the message indicating the security mode completion between the terminal 20 and the RAN 10 includes information indicating security mode completion. In addition, the message between the RAN 10 and the CAMF 310 and the message between the CAMF 310 and the SMF 370 include information indicating the RAN side termination point.

The SMF 370 transmits a message indicating the PDU session establishment acceptance to the RAN 10 (RAN side termination point without involving the CAMF 310 (step S106).

Hereinafter, the communication between the terminal 20 and the SMF 370 does not involve the CAMF 310.

According to an embodiment of the present invention, in a case where the SMF 370 establishes a PDU session between the SMF 370 and the terminal 20, the SMF 370 functions as a termination point of the communication in which confidentiality and the integrity protection of NAS signals are guaranteed. According to the above-described configuration, localization or shortening of the NAS signal transmission path can be achieved while guaranteeing the security.

### (Embodiment 2)

In this embodiment, an example will be described in which the LMF 391 performs communications with the terminal 20 in order to acquire the position information.

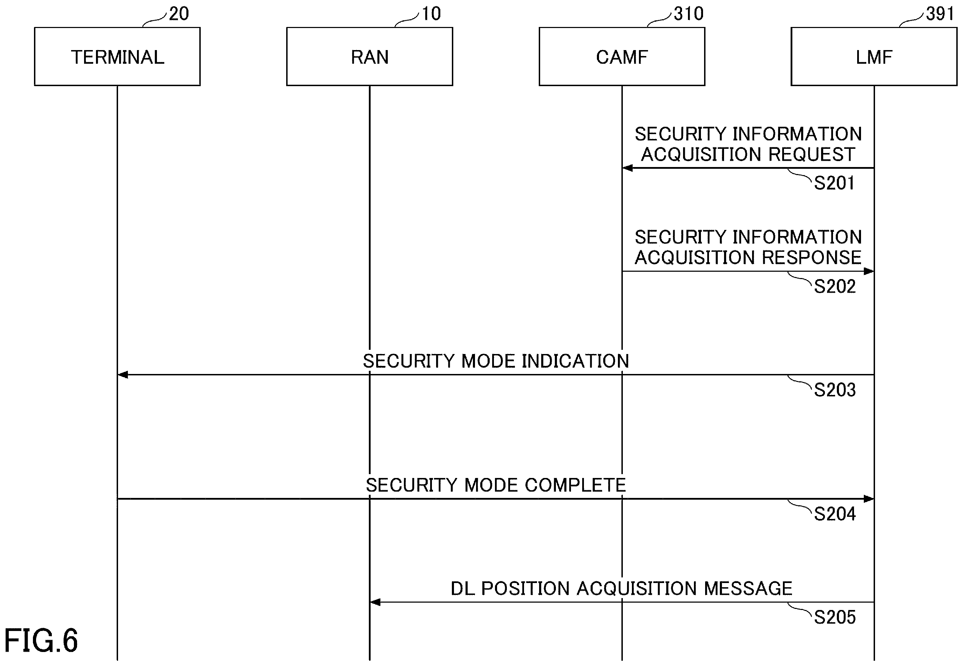

Fig. 6 is a sequence diagram illustrating an example of a flow of a position information acquisition procedure related to Embodiment 2 of the present invention. It is assumed that the initial registration procedure of the terminal 20 is completed.

The CAMF 310 has stored information indicating the security capability of the terminal 20 and a key Kamf. In addition, confidentiality and the integrity protection are guaranteed in the communication between the terminal 20 and the CAMF 310.

The LMF 391 that accommodates a network slice of S-NSSAI=B transmits a message indicating a security information acquisition request to the CAMF 310 (step S201). Here, the information indicating the security information acquisition request includes information specifying the network slice (for example, "S-NSSAI=B").

The CAMF 310 generates a key Klmf_b from the key Kamf for the LMF 391 that accommodates the specified network slice (for example, "S-NSSAI=B"). Here, information indicating the network node type (for example, "NF type=LMF") and information specifying the network slice (for example, "S-NSSAI=B") are included as inputs to the key-deriving function.

The CAMF 310 transmits a message indicating a security information acquisition response to the LMF 391 (step S202). Here, the message indicating the security information acquisition response includes information indicating the security capability of the terminal 20 and a key Klmf_b.

The LMF 391 generates a key for confidentiality Klmf_b_nas_enc and a key for the integrity protection Klmf_b_nas_int from the key Klmf_b. Subsequently, the LMF 391 transmits a message indicating the security mode indication to the terminal 20 via the CAMF 310 (step S203).

The terminal 20 generates the key for confidentiality Klmf_b_nas_enc and the key for the integrity protection Klmf_b_nas_int by using the calculation algorithm that is shared in advance.

Subsequently, the terminal 20 transmits a message indicating the security mode completion to the LMF 391 via the CAMF 310 (step S204). Here, the message indicating the security mode completion between the terminal 20 and the RAN 10 includes information indicating security mode completion. In addition, the message between the RAN 10 and the CAMF 310 and the message between the CAMF 310 and the LMF 391 include information indicating the RAN side termination point.

The LMF 391 transmits a message indicating the DL position acquisition to the RAN 10 (RAN side termination point) without involving the CAMF 310 (step S205).

Hereinafter, the communication between the terminal 20 and the LMF 391 does not involve the CAMF 310.

According to an embodiment of the present invention, in a case where the LMF 391 transmits and receives information related to the position of the terminal 20 to and from the terminal 20, the LMF 391 functions as a termination point of the communication in which confidentiality and the integrity protection of NAS signals are guaranteed. According to the above-described configuration, localization or shortening of the NAS signal transmission path can be achieved while guaranteeing the security.

### (Embodiment 3)

In this embodiment, an example will be described in which the UE-PCF 361 performs communications with the terminal 20 in order to configure the terminal policy.

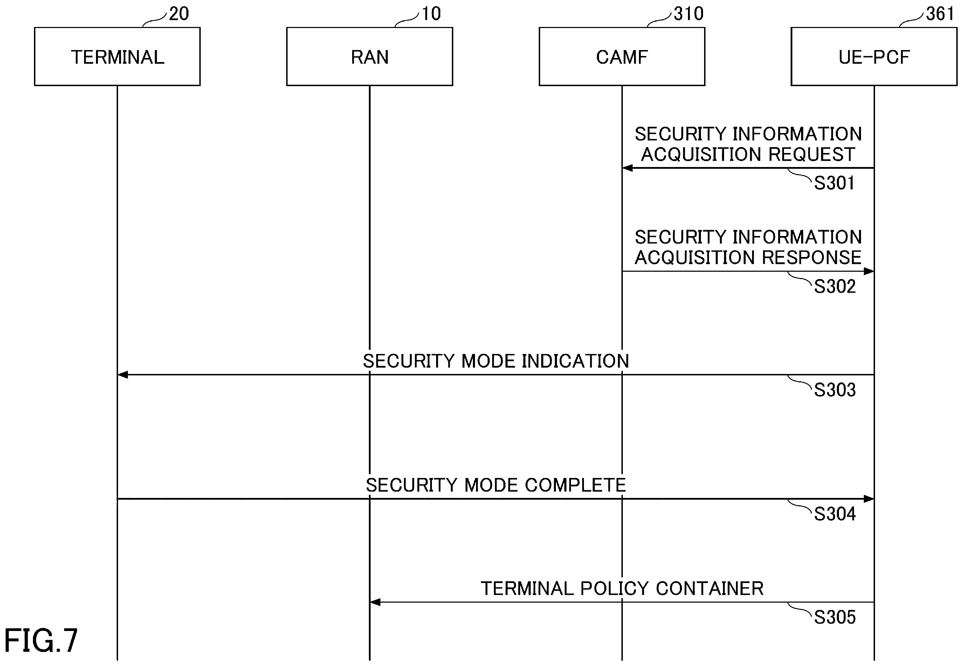

Fig. 7 is a sequence diagram illustrating an example of a flow of a terminal policy configuration procedure related to Embodiment 3 of the present invention. It is assumed that the initial registration procedure of the terminal 20 is completed.

The CAMF 310 has stored information indicating the security capability of the terminal 20 and a key Kamf. In addition, confidentiality and the integrity protection are guaranteed in the communication between the terminal 20 and the CAMF 310.

The UE-PCF 361 that accommodates a network slice of S-NSSAI=C transmits a message indicating a security information acquisition request to the CAMF 310 (step S301). Here, the information indicating the security information acquisition request includes information specifying the network slice (for example, "S-NSSAI=C").

The CAMF 310 generates a key Kuepcf_c from the key Kamf for the UE-PCF 361 that accommodates the specified network slice (for example, "S-NSSAI=C"). Here, information indicating the network node type (for example, "NF type=UE-PCF") and information specifying the network slice (for example, "S-NSSAI=C") are included as inputs to the key deriving function.

The CAMF 310 transmits a message indicating a security information acquisition response to the UE-PCF 361 (step S302). Here, the message indicating the security information acquisition response includes information indicating the security capability of the terminal 20 and a key Kuepcf_c.

The UE-PCF 361 generates a key for confidentiality Kuepcf_c_nas_enc and a key for the integrity protection Kuepcf_c_nas_int from the key Kuepcf_c. Subsequently, the UE-PCF 361 transmits a message indicating the security mode indication to the terminal 20 via the CAMF 310 (step S303).

The terminal 20 generates the key for confidentiality Kuepcf_c_nas_enc and the key for the integrity protection Kuepcf_c_nas_int by using the calculation algorithm that is shared in advance.

Subsequently, the terminal 20 transmits a message indicating the security mode completion to the UE-PCF 361 via the CAMF 310 (step S304). Here, the message indicating the security mode completion between the terminal 20 and the RAN 10 includes information indicating security mode completion. In addition, the message between the RAN 10 and the CAMF 310 and the message between the CAMF 310 and the UE-PCF 361 include information indicating the RAN side termination point.

The UE-PCF 361 transmits a message indicating the terminal policy container to the RAN 10 (RAN side termination point) without involving the CAMF 310 (step S305).

Hereinafter, the communication between the terminal 20 and the UE-PCF 361 does not involve the CAMF 310.

According to an embodiment of the present invention, in a case where the UE-PCF 361 transmits and receives information related to the policy control of the terminal 20 to and from the terminal 20, the UE-PCF 361 functions as a termination point of the communication in which confidentiality and the integrity protection of NAS signals are guaranteed. According to the above-described configuration, localization or shortening of the NAS signal transmission path can be achieved while guaranteeing the security.

According to an embodiment of the present invention, each network node functions as a termination point of individual NAS signals. According to the above-described configuration, localization or shortening of the NAS signal transmission path can be achieved while guaranteeing the security.

### (Device configuration)

Next, a functional configuration example of the base station 10, the terminal 20, and various types of network nodes that perform processes and operations described above will be described. The base station 10, the terminal 20, and various types of network nodes include functions for implementing the embodiments described above. It is to be noted, however, that each of the base station 10, the terminal 20, and various types of network nodes may include only some of the functions in the embodiments.

### <Base station 10 and network node>

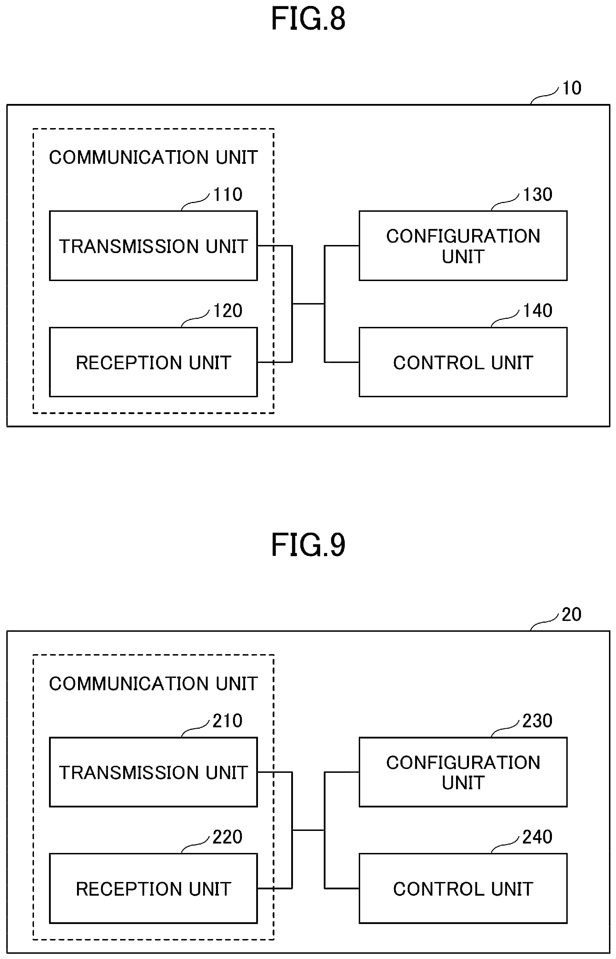

Fig. 8 is a diagram illustrating an example of a functional configuration of the base station 10. As shown in Fig. 8, the base station 10 includes a transmission unit 110, a reception unit 120, a configuration unit 130, and a control unit 140. The functional configuration illustrated in Fig. 8 is merely an example. Functional divisions and names of functional units may be anything as long as operations according to an embodiment of the present invention can be performed. It is to be noted that network nodes may have a similar functional configuration as the base station 10. In addition, the network nodes having a plurality of different functions in the system architecture may be composed of a plurality of network nodes separated for each function.

The transmission unit 110 includes a function for generating a signal to be transmitted to the terminal 20 or to another network node and transmitting the signal in a wired manner or wireless manner. The reception unit 120 includes a function for receiving various types of signals transmitted from the terminal 20 or another network node, and obtaining, for example, information of an upper layer from the received signals.

The configuration unit 130 stores preset configuration information and various configuration information items to be transmitted to the terminal 20 in a storage apparatus and reads the preset configuration information from the storage apparatus as necessary. Contents of the configuration information are, for example, configurations related to communications using the NTN.

The control unit 140 performs processing related to communications using the NTN as described in the embodiments. Further, the control unit 140 performs a process related to communications with the terminal 20. Further, the control unit 140 performs a process related to geographical location verification of the terminal 20. The functional units related to signal transmission in the control unit 140 may be included in the transmission unit 110, and the functional units related to signal reception in the control unit 140 may be included in the reception unit 120.

### <Terminal 20>

Fig. 9 is a diagram illustrating an example of a functional configuration of the terminal 20. As shown in Fig. 9, the terminal 20 includes a transmission unit 210, a reception unit 220, a configuration unit 230, and a control unit 240. The functional configuration illustrated in Fig. 9 is merely an example. Functional divisions and names of functional units may be anything as long as operations according to an embodiment of the present invention can be performed. Similar to the terminal 20, the USIM that is attached to the terminal 20 may include a transmission unit 210, a reception unit 220, a configuration unit 230, and a control unit 240.

The transmission unit 210 generates a transmission signal from transmission data and transmits the transmission signal wirelessly. The reception unit 220 receives various signals wirelessly and obtains higher layer signals from the received physical layer signals. Furthermore, the reception unit 220 has a function of receiving NR-PSS, NR-SSS, NR-PBCH, DL/UL control signals, or reference signals transmitted from the network node.

The configuration unit 230 stores various types of configuration information received from the network node via the reception unit 220 in the storage device and reads the configuration information from the storage device depending on the necessity. In addition, the configuration unit 230 also stores pre-configured configuration information.

The network node or the communication system in an embodiment of the present invention may be configured to be a network node or a communication system as described in each of the items below. In addition, a communication method below may be performed.

### <Configuration related to an embodiment of the present invention>

### (1st item)

A network node including:
a control unit configured to, in order to establish a safe communication path between another network node and a terminal, based on a type of the another network node or on information indicating a network slice to which the another network node belongs, generate a key, used by the another network node, in a manner in which a value of the key is different for each type or for each network slice; and
a transmission unit configured to transmit a message including the key to the another network node.

### (2nd item)

A network node including:
a reception unit configured to receive, from another network node, a message including a key for establishing a safe communication path between the network node and a terminal;
a control unit configured to generate a key for confidentiality and a key for integrity protection, based on the key; and
a transmission unit configured to transmit, to the terminal, a message for indicating a security mode by using the safe communication path between the another network node and the terminal.

### (3rd item)

A communication system including: a first network node; and a second network node, wherein
the first network node includes:
a control unit configured to, in order to establish a safe communication path between the second network node and a terminal, based on a type of the second network node or on information indicating a network slice to which the second network node belongs, generate a key, used by the second network node, in a manner in which a value of the key is different for each type or for each network slice; and
a transmission unit configured to transmit a message including the key to the second network node, and wherein
the second network node includes:
   a receiver unit configured to receive the message including the key from the first network node;
   a control unit configured to generate a key for confidentiality and a key for integrity protection, based on the key; and
   a transmission unit configured to transmit, to the terminal, a message for indicating a security mode by using the safe communication path between the first network node and the terminal.

### (4th item)

A communication method performed by a network node, the communication method including:
a step of, in order to establish a safe communication path between another network node and a terminal, based on a type of the another network node or on information indicating a network slice to which the another network node belongs, generating a key, used by the another network node, in a manner in which a value of the key is different for each type or for each network slice; and
a step of transmitting a message including the key to the another network node.

### (5th item)

A communication method performed by a network node, the communication method including:
a step of receiving, from another network node, a message including a key for establishing a safe communication path between the network node and a terminal;
a step of generating a key for confidentiality and a key for integrity protection, based on the key; and
a step of transmitting, to the terminal, a message for indicating a security mode by using the safe communication path between the another network node and the terminal.

### (6th item)

A communication method performed by a communication system including: a first network node; and a second network node, wherein
the first network node:
in order to establish a safe communication path between the second network node and a terminal, based on a type of the second network node or on information indicating a network slice to which the second network node belongs, generates a key, used by the second network node, in a manner in which a value of the key is different for each type or for each network slice; and
transmits a message including the key to the second network node, and wherein
the second network node:
   receives the message including the key from first network node;
   generates a key for confidentiality and a key for integrity protection, based on the key; and
   transmits, to the terminal, a message for indicating a security mode by using a safe communication path between the first network node and the terminal.

According to any one of the above-described configurations, a technique is provided that enables implementation of localization and shortening of the NAS signal transmission path together while guaranteeing the security. According to the first item, in order to establish a safe communication path between another network node and the terminal, based on the type of the another network node or the information indicating the network slice to which the another network node belongs, a message including a key can be transmitted to the another network node, the key being generated in a manner in which the value is different for each type or for each network slice and the key being used by the another network node. According to the second item, a key for confidentiality and a key for the integrity protection can be generated based on the key, and a message indicating the security mode indication can be transmitted to the terminal by using the safe communication path between the another network node and the terminal.

### (Hardware structure)

The block diagrams that have been used to describe the above embodiments (Fig. 8 and Fig. 9) show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, a functional block (component) to implement a function of transmission may be referred to as a "transmitting section (transmitting unit)," a "transmitter," and the like. The method for implementing each component is not particularly limited as described above.

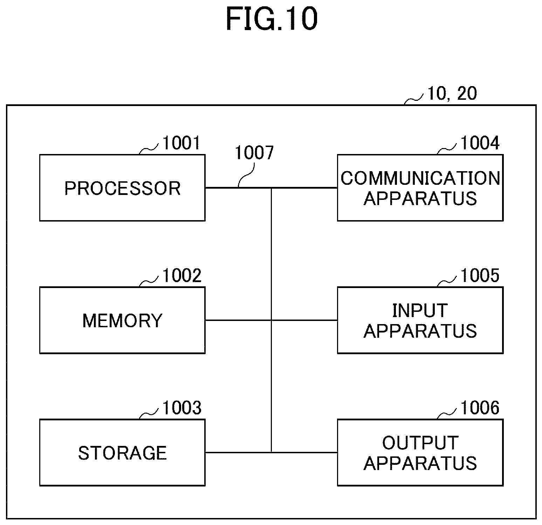

For example, a network node, a terminal 20, and so on according to one embodiment of the present disclosure may function as a computer that executes the processes of the radio communication method of the present disclosure. Fig. 10 is a diagram to show an example of a hardware structure of the base station 10 and the terminal 20 according to one embodiment. The network node may have a similar hardware configuration as the base station 10. USIM may have a similar hardware structure as the terminal 20. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 8 may be implemented by control programs that are stored in the memory 1002 and that operate on the processor 1001. In addition, for example, the control unit 240 of the terminal 20 illustrated in Fig. 9 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

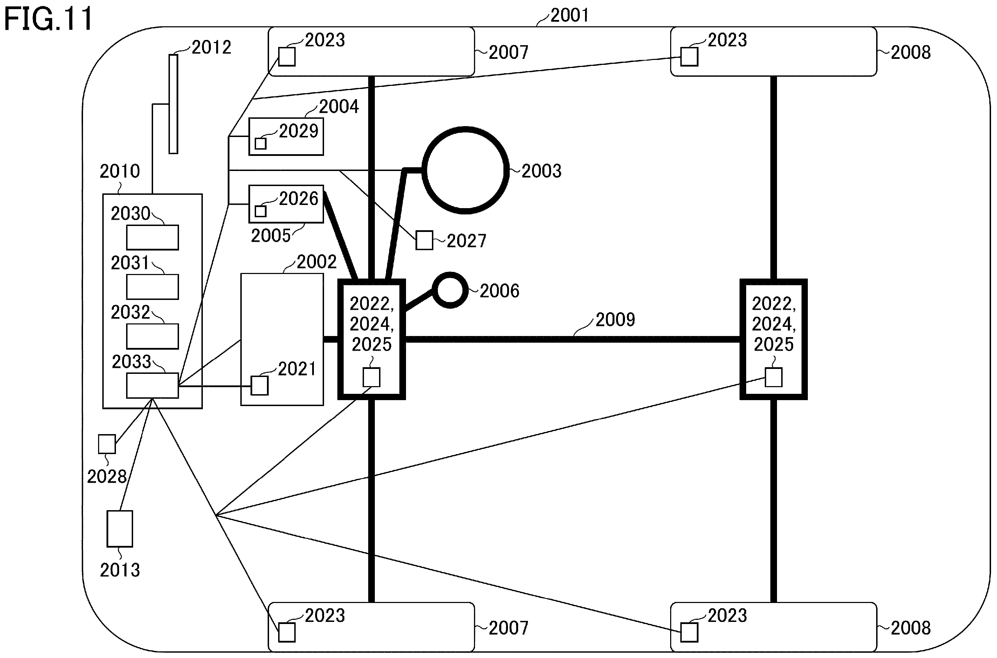

Fig. 11 shows an example of a configuration of a vehicle 2001. As shown in Fig. 11, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2029 described above input to the electronic control unit 2010, information obtained based on the signals, and information based on an input from the outside (a user) obtained via the information service unit 2012, to the external apparatus via radio communication. The electronic control unit 2010, the various sensors 2021 to 2029, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display and a speaker, based on the PDSCH received by the communication module 2013 (or data/information decoded from the PDSCH)).

In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

The order of processes, sequences, flowcharts, and so on that have been used to describe the aspects/embodiments in the present specification may be reordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The mobile station is an object that can move, and the moving speed can be any speed. In addition, a mobile station that is not moving is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a user terminal. For example, each aspect/embodiment of the present disclosure may be applied to the structure that replaces a communication between a base station and a user terminal with a communication between a plurality of terminals 20 (for example, which may be referred to as "Device-to-Device (D2D)," "Vehicle-to-Everything (V2X)," and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for terminals 20, scheduling of allocating radio resources (such as a frequency bandwidth and transmit power available for each terminal 20) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (Res). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a terminal 20.

At least one of configured BWPs may be active, and a terminal 20 may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station (RAN)
11 Satellite
110 Transmission unit
120 Reception unit
130 Configuration unit
140 Control unit
20 Terminal
30 Core network
40 DN
210 Transmission unit
220 Reception unit
230 Configuration unit
240 Control unit
310 CAMF
320 UDM
330 NEF
340 NRF
350 AUSF
360 PCF
361 UE-PCF
370 SMF
380 UPF
390 AF
391 LMF
1001 Processor
1002 Memory
1003 Storage
1004 Communication apparatus
1005 Input apparatus
1006 Output apparatus
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A network node comprising:
a control unit configured to, in order to establish a safe communication path between another network node and a terminal, based on a type of the another network node or on information indicating a network slice to which the another network node belongs, generate a key, used by the another network node, in a manner in which a value of the key is different for each type or for each network slice; and
a transmission unit configured to transmit a message including the key to the another network node.

2. A network node comprising:
a reception unit configured to receive, from another network node, a message including a key for establishing a safe communication path between the network node and a terminal;
a control unit configured to generate a key for confidentiality and a key for integrity protection, based on the key; and
a transmission unit configured to transmit, to the terminal, a message for indicating a security mode by using the safe communication path between the another network node and the terminal.

3. A communication system comprising: a first network node; and a second network node, wherein
the first network node includes:
a control unit configured to, in order to establish a safe communication path between the second network node and a terminal, based on a type of the second network node or on information indicating a network slice to which the second network node belongs, generate a key, used by the second network node, in a manner in which a value of the key is different for each type or for each network slice; and
a transmission unit configured to transmit a message including the key to the second network node, and wherein
the second network node includes:
a receiver unit configured to receive the message including the key from the first network node;
a control unit configured to generate a key for confidentiality and a key for integrity, based on the key; and
a transmission unit configured to transmit, to the terminal, a message for indicating a security mode by using a safe communication path between the first network node and the terminal.

4. A communication method performed by a network node, the communication method comprising:
a step of, in order to establish a safe communication path between another network node and a terminal, based on a type of the another network node or on information indicating a network slice to which the another network node belongs, generating a key, used by the another network node, in a manner in which a value of the key is different for each type or for each network slice; and
a step of transmitting a message including the key to the another network node.

5. A communication method performed by a network node, the communication method comprising:
a step of receiving, from another network node, a message including a key for establishing a safe communication path between the network node and a terminal;
a step of generating a key for confidentiality and a key for integrity protection, based on the key; and
a step of transmitting, to the terminal, a message for indicating a security mode by using the safe communication path between the another network node and the terminal.

6. A communication method performed by a communication system comprising: a first network node; and a second network node, wherein
the first network node:
in order to establish a safe communication path between the second network node and a terminal, based on a type of the second network node or on information indicating a network slice to which the second network node belongs, generates a key, used by the second network node, in a manner in which a value of the key is different for each type or for each network slice; and
transmits a message including the key to the second network node, and wherein
the second network node:
receives the message including the key from first network node;
generates a key for confidentiality and a key for integrity, based on the key; and
transmits, to the terminal, a message for indicating a security mode by using a safe communication path between the first network node and the terminal.
